# EUROPÄISCHE PATENTSCHRIFT

(11) **EP 1 414 613 B1**
(45) Veröffentlichungstag und Bekanntmachung des Hinweises auf die Patenterteilung: **15.06.2005**
(21) Anmeldenummer: 02794761.3
(22) Anmeldetag: 08.08.2002
(51) Int. Cl.: B23P 15/10, F16D 65/20, F16J 1/00, B21D 22/21

(54) **HYDRAULIKKOLBEN AUS WALZBLECH UND VERFAHREN ZU DESSEN HERSTELLUNG**
HYDRAULIC PISTON CONSISTING OF ROLLED SHEET METAL AND METHOD FOR PRODUCING THE SAME
PISTON HYDRAULIQUE EN TOLE LAMINEE ET PROCEDE POUR SA REALISATION

(30) Priorität: 08.08.2001 RU 2001122026
(43) Veröffentlichungstag der Anmeldung: 06.05.2004
(73) Patentinhaber: Lucas Automotive GmbH, 56070 Koblenz (DE)
(72) Erfinder: BENNETT, Scott, Woodward, Heide Park, UT (US); GELLER, Vladimir Grigorievich, St.Petersburg, 194291 (RU); ELKIN, Nikolai Michailovich, St.Petersburg, 197183 (RU)
(74) Vertreter: Beyer, Andreas, Dr.
(86) Internationale Anmeldenummer: PCT/EP2002/008887
(87) Internationale Veröffentlichungsnummer: WO 2003/015980

(56) Entgegenhaltungen:
- WO-A-91/12445
- DE-A- 3 834 420
- FR-A- 1 464 559
- GB-A- 1 169 251
- PATENT ABSTRACTS OF JAPAN vol. 013, no. 300 (M-848), 11. Juli 1989 (1989-07-11) -& JP 01 091930 A (TAIHO KOGYO CO LTD), 11. April 1989 (1989-04-11)
- PATENT ABSTRACTS OF JAPAN vol. 014, no. 347 (M-1002), 26. Juli 1990 (1990-07-26) -& JP 02 120536 A (SUMITOMO SHOJI KK;OTHERS: 02), 8. Mai 1990 (1990-05-08)
- PATENT ABSTRACTS OF JAPAN vol. 015, no. 378 (M-1161), 24. September 1991 (1991-09-24) -& JP 03 151123 A (KUNO KINZOKU KOGYO KK), 27. Juni 1991 (1991-06-27)
- DATABASE WPI Section PQ, Week 200130 Derwent Publications Ltd., London, GB; Class Q18, AN 2001-289213 XP002219255 -& RU 2 163 987 C (SINKHRON-RUS CO LTD), 10. März 2001 (2001-03-10) in der Anmeldung erwähnt & WO 01 77547 A (SINCHRON-RUS CO LTD) 18. Oktober 2001 (2001-10-18) in der Anmeldung erwähnt
- PATENT ABSTRACTS OF JAPAN vol. 011, no. 128 (M-583), 22. April 1987 (1987-04-22) -& JP 61 269938 A (KUNO KINZOKU KOGYO KK), 29. November 1986 (1986-11-29)
- PATENT ABSTRACTS OF JAPAN vol. 005, no. 166 (M-093), 23. Oktober 1981 (1981-10-23) -& JP 56 090130 A (AKEBONO BRAKE IND CO LTD), 22. Juli 1981 (1981-07-22)

## Beschreibung

Die Erfindung betrifft einen Hydraulikkolben aus Walzblech, nach dem Oberbegriff des Anspruchs 1 und ein Verfahren zur Herstellung eines solchen Kolbens. Kolben dieser Art finden beispielsweise Verwendung in hydraulisch betätigten Fahrzeugbremsen.
Aus dem russischen Patent 2 163 987 ist ein Hydraulikkolben nach dem Oberbegriff des Anspruchs 1 bekannt.

Kolben der genannten Art müssen einander widersprechende Anforderungen erfüllen: Einerseits sollen sie leicht sein, um eine geringe Trägheit zu haben, andererseits müssen sie so stabil sein, dass bei einer hohen auf den Boden des Kolbens wirkenden Belastung, wie sie z.B. bei einer starken Bremsung durch den hohen Hydraulikdruck im Bremssystem auftritt, es zu keinen radialen Deformationen der Seitenwand des Kolbens kommen kann. Ist die letzte Bedingung nicht erfüllt, kann ein völliger Funktionsverlust des Kolbens eintreten.

Hydraulikkolben haben gewöhnlich eine zylindrische Becherform mit einem offenen Ende. In einem an das offene Ende des Kolbens angrenzenden Abschnitt der Außenfläche der Seitenwand ist häufig eine Ringnut vorhanden, die zur Befestigung einer Schutzmanschette dient. Der Bereich der Ringnut ist im Hinblick auf eine Materialverformung durch Belastung besonders gefährdet, weil die die Wand durch die Nut geschwächt ist.

Aus der WO 91/12445 ist ein im Ziehverfahren hergestellter Kolben bekannt, bei dem die Wanddicke im kritischen Nutbereich nicht kleiner ist als die Wanddicke in den übrigen Bereichen des Kolbens. Zwei kritische Bereiche sind in der WO 91/12445 genannt, zum einen der Bereich der Nut und zum anderen der innere Bereich einer Federanordnung. Die Stabilitätsanforderungen in diesen beiden Bereichen bestimmen die Dicke der Kolbenwand.

Aus dem russischen Patent 2 163 987 ist ein Ziehverfahren zur Kolbenherstellung bekannt, das es ermöglicht, einen Kolben mit einer stabilen und dennoch dünnen Wand herzustellen. Der Kolben ist eine Hohlkonstruktion mit offenem Ende. Seine äußere Wand ist zylindrisch geformt und weist eine Nut zur Befestigung einer Schutzmanschette auf. Die Innenfläche des Kolbens ist in einem an das offene Ende angrenzenden und sich in axialer Richtung innen über die Ringnut erstreckenden Bereich zylindrisch geformt. In einem weiter innen liegenden Abschnitt des Kolbens ist der Innendurchmesser größer als in dem an das offene Ende angrenzenden Bereich. Auf diese Weise ist die Dicke der Seitenwand am offenen Ende größer als nahe dem Kolbenboden, was der Widerstandsfähigkeit gegenüber axialen Kräften im kritischen Bereich der Nut zugute kommt. Es ist allerdings kompliziert, einen solchen Kolben mit zwei Innenflächen verschiedenen Innendurchmessers und gleichem Außendurchmesser herzustellen, insbesondere weil die Innenfläche mit dem kleineren Innendurchmesser am offenen Ende des Kolbens liegt.

Der Erfindung liegt die Aufgabe zugrunde, einen Hydraulikkolben bereitzustellen, der bei hoher Stabilität ein geringes Gewicht hat und am offenen Ende eine ausreichende Wanddicke aufweist, um die einwandfreie Übertragung axialer Kräfte zu gewährleisten. Ferner soll der Kolben einfach herstellbar sein.

Diese Aufgabe ist erfindungsgemäß durch einen Hydraulikkolben, der die im Anspruch 1 genannten Merkmale aufweist und durch ein Herstellungsverfahren, das die im Anspruch 6 angegebenen Schritte umfasst, gelöst.

Im Unterschied zu aus dem Stand der Technik bekannten zylindrischen Hydraulikkolben verringert sich die Dicke der Seitenwand des Kolbens von jenem Teil der Innenfläche der Seitenwand an, die an das offene Ende angrenzt und eine zylindrische Form aufweist, bis zum Kolbenboden monoton. Mit anderen Worten, von dem Abschnitt der Innenfläche der Seitenwand mit zylindrischer Form bis zum Kolbenboden vergrößert sich der Innendurchmesser des erfindungsgemäßen Hydraulikkolbens monoton. Mit dem Begriff "monoton" ist hier insbesondere eine kontinuierliche Verringerung der Seitenwanddicke bzw. eine kontinuierliche Vergrößerung des Innendurchmessers gemeint. Ein solchermaßen gestalteter Kolben hat eine hervorragende Stabilität gegenüber den geforderten Belastungsarten und lässt sich zudem einfach herstellen.

Gemäß einer bevorzugten Ausführungsform ist der Kolbenboden nach innen gewölbt, insbesondere konkav gewölbt. Eine solche Wölbung des Kolbenbodens gewährleistet eine gute Widerstandsfähigkeit gegenüber den üblichen Arbeitsbelastungen.

Vorzugsweise hat dann, wenn der Kolbenboden nach innen gewölbt ist, der radial äußere Teil des Kolbenbodens eine Kegelstumpfform und der zentrale oder mittlere Teil des Kolbenbodens eine Kugelkalottenform. Die Erstreckung des kegelstumpfförmigen Teils des Kolbenbodens längs seines Profils ist dabei vorzugsweise nicht größer als das Dreifache der Wanddicke, die die Seitenwand in ihrem an den Kolbenboden angrenzenden Abschnitt aufweist. Eine teils kegelstumpfförmige, teils kugelkalottenförmige Gestalt des Kolbenbodens ist insbesondere vorteilhaft für die Formgebung der Außenfläche der Seitenwand im Übergangsbereich der Seitenwand zum Kolbenboden durch Formpressen.

Das erfindungsgemäße Herstellungsverfahren umfasst in seiner einfachsten Ausführungsform die Schritte des Ausstanzens eines scheibenförmigen runden Rohlings aus einem Stück Walzblech, das Tiefziehen des scheibenförmigen runden Rohlings in eine Becherform mittels einer Matrize und eines Stempels, das Formpressen des becherförmigen Rohlings zur Formung des Kolbenbodens und der zylindrischen Außenfläche des Hydraulikkolbens, und das Einarbeiten einer Ringnut in die Außenfläche des Hydraulikkolbens. Man erkennt, dass bei dem erfindungsgemäßen Herstellungsverfahren nur sehr wenig spanabhebende Bearbeitung erforderlich ist, etwa zum Erzeugen der Ringnut. Grundsätzlich wird der Kolben jedoch aus einem Walzblech durch Zieh- und Formpressvorgänge hergestellt.

Bei bevorzugten Ausgestaltungen des erfindungsgemäßen Herstellungsverfahrens findet das Tiefziehen in mehreren Schritten statt. Gemäß einer Ausführungsform wird der scheibenförmige runde Rohling zunächst mittels eines ersten Stempels durch eine erste kreisförmige Matrizenöffnung und anschließend mittels eines zweiten Stempels durch eine zweite kreisförmige Matrizenöffnung gepresst, deren Durchmesser kleiner als der Durchmesser der ersten Matrizenöffnung ist. Im ersten Tiefziehschritt wird ein noch relativ flacher, becherförmiger Rohling erhalten, dessen Innendurchmesser dem Außendurchmesser des verwendeten Stempels entspricht. Als Folge der Materialumformung verändert sich die Dicke des Bleches. Sie ist nach dem Tiefziehschritt am offenen Ende größer als in einem Übergangsbereich zwischen Seitenwand und Boden, da sich dort aufgrund des Ziehvorganges die Materialdicke verringert. Die Wanddickenverminderung vom offenen Ende zum Übergangsbereich zwischen Seitenwand und Boden findet kontinuierlich statt. Durch den zweiten Tiefziehschritt wird die Becherform schmaler und höher und es kommt zu einer weiteren Verringerung der Wanddicke im Übergangsbereich von der Seitenwand zum Boden. Der Innendurchmesser des becherförmigen Rohlings nach dem zweiten Tiefziehschritt ist bestimmt durch den Außendurchmesser des im zweiten bestimmt durch den Außendurchmesser des im zweiten Tiefziehschritt verwendeten Stempels. Vorzugsweise sind die im ersten und im zweiten Tiefziehschritt verwendeten Stempel zylindrisch.

Gemäß einer besonders bevorzugten Ausgestaltung des erfindungsgemäßen Verfahrens wird der becherförmige Rohling mittels eines dritten Stempels durch eine dritte kreisförmige Matrizenöffnung gepresst, deren Durchmesser kleiner als der Durchmesser der zweiten Matrizenöffnung ist, wobei der dritte Stempel einen von seinem freien Ende ausgehenden ersten zylindrischen Abschnitt und einen sich daran anschließenden zweiten zylindrischen Abschnitt aufweist, dessen Durchmesser größer als der Durchmesser des ersten zylindrischen Abschnitts und kleiner als der Durchmesser der dritten Matrizenöffnung ist. Mit diesem dritten Tiefziehschritt wird zunächst das Durchmesser-Höhenverhältnis des becherförmigen Rohlings weiter in Richtung auf die gewünschte Endform geändert, wobei es zu einer weiteren Verringerung der Wanddicke im Bereich des Übergangs zwischen der Seitenwand und dem Kolbenboden kommt, und zum anderen wird nahe dem offenen Ende des Rohlings in der Seitenwand eine innere Stufe ausgebildet, die für nachfolgende Bearbeitungsschritte sehr vorteilhaft ist.

Vorzugsweise wird die Stufe in der Innenfläche dazu herangezogen, um im Anschluss an das Tiefziehen in eine Becherform durch einen ersten Formpressvorgang einen nach innen gewölbten Kolbenboden auszubilden, indem ein stufenförmiger Stempel mit der Stufe in der Seitenwand des Rohlings in Eingriff kommt und den Rohling in eine Formmatrize drückt.

Auf diesen ersten Formpressvorgang folgt vorzugsweise ein vierter Tiefziehschritt, in dem der becherförmige Rohling wiederum mittels eines stufenförmigen Stempels, der mit der Stufe in der Seitenwand des Rohlings in Eingriff tritt, durch eine vierte kreisförmige Matrizenöffnung gepresst wird, deren Durchmesser kleiner als der Durchmesser der dritten Matrizenöffnung ist. In diesem vierten Ziehschritt wird die zylindrische Außenfläche der Seitenwand geformt.

Gemäß einer besonders bevorzugten Ausgestaltung des erfindungsgemäßen Verfahrens wird im Anschluss an das Formen der zylindrischen Außenfläche der Seitenwand ein zweiter Formpressvorgang mittels einer Formmatrize und eines stufenförmigen, mit der Stufe in der Seitenwand des Rohlings in Eingriff tretenden Stempels durchgeführt, um einen Übergangsbereich zwischen dem Kolbenboden und der Seitenwand zu formen. Dabei ist vorteilhaft der den Kolbenboden berührende Bereich der Matrize im Zentrum kalottenförmig und am Rand kegelstumpfförmig ausgebildet.

Vorzugsweise folgt im Anschluss an das Formen des Übergangsbereiches zwischen dem Kolbenboden und der Seitenwand ein dritter Formpressvorgang mittels einer Formmatrize und eines wiederum stufenförmigen, mit der Stufe in der Seitenwand des Rohlings in Eingriff tretenden Stempels, um dem Kolbenboden seine endgültige Gestalt zu geben.

Nach dem Ausbilden der Ringnut kann zumindest die Außenfläche nachbearbeitet werden. Das Nachbearbeiten der Außenfläche kann einen oder mehrere Schritte umfassen. Vorzugsweise umfasst das Nachbearbeiten wenigstens einen der Schritte des Schleifens, des Beschichtens und des Polierens.

Ein im Rahmen der Herstellung des Hydraulikkolbens entstehendes, Zwischenprodukt ist hergestellt mittels Ausstanzens eines scheibenförmigen runden Rohlings aus einem Stück Walzblech, mittels Tiefziehens des scheibenförmigen runden Rohlings in eine Blechform unter Benutzung einer Matrize und eines Stempels, sowie mittels Formpressens des becherförmigen Rohlings zur Formung des Kolbenbodens und der zylindrischen Außenfläche des Hydraulikkolbens.

Bevorzugte Ausführungsbeispiele des erfindungsgemäßen Hydraulikkolbens und des Verfahrens zu seiner Herstellung werden anhand der beigefügten, schematischen Figuren näher erläutert. Es zeigt:
- Fig. 1: ein erstes Ausführungsbeispiel eines erfindungsgemäßen Hydraulikkolbens im Längsschnitt,
- Fig. 2: einen im Rahmen der Herstellung des Kolbens aus Fig. 1 erfolgenden Tiefziehschritt,
- Fig. 3: ein im Rahmen der Herstellung des Kolbens aus Fig. 1 erfolgenden Formpressschritt,
- Fig. 4: einen Ausstanzschritt bei der Herstellung des Kolbens aus Fig. 13,
- Fig. 5: einen ersten Tiefziehschritt bei der Herstellung des Kolbens aus Fig. 13,
- Fig. 6: einen zweiten Tiefziehschritt bei der Herstellung des Kolbens aus Fig. 13,
- Fig. 7: einen dritten Tiefziehschritt bei der Herstellung des Kolbens aus Fig. 13,
- Fig. 8: einen ersten Formpressschritt bei der Herstellung des Kolbens aus Fig. 13,
- Fig. 9: einen vierten Tiefziehschritt bei der Herstellung des Kolbens aus Fig. 13,
- Fig. 10: einen zweiten Formpressschritt bei der Herstellung des Kolbens aus Fig. 13,
- Fig. 11: einen dritten Formpressschritt bei der Herstellung der Kolbens aus Fig. 13,
- Fig. 12: einen nahezu fertigen Kolben im Längsschnitt, und
- Fig. 13: ein zweites Ausführungsbeispiel eines erfindungsgemäßen Hydraulikkolbens im Längsschnitt.

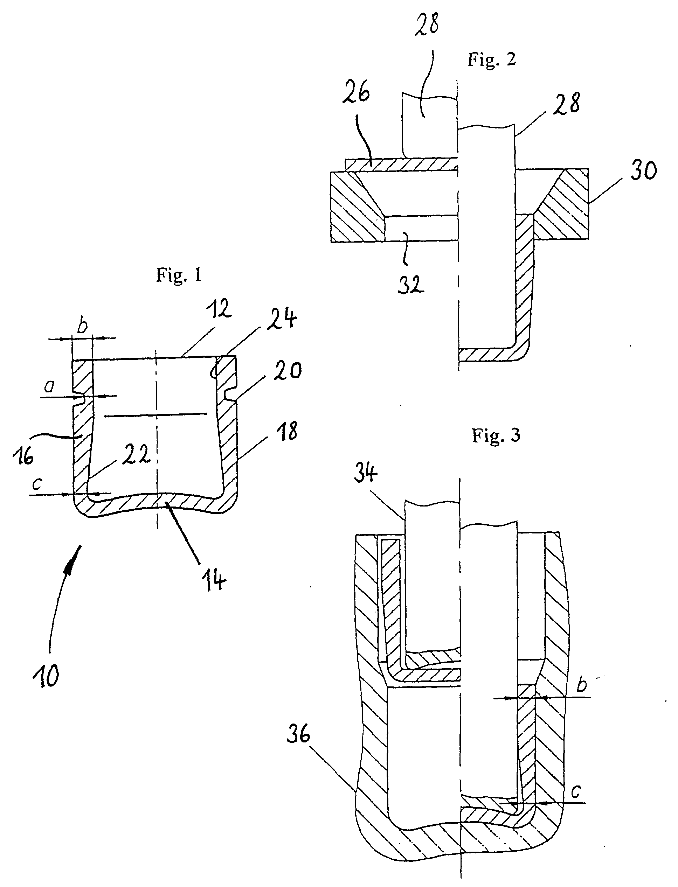

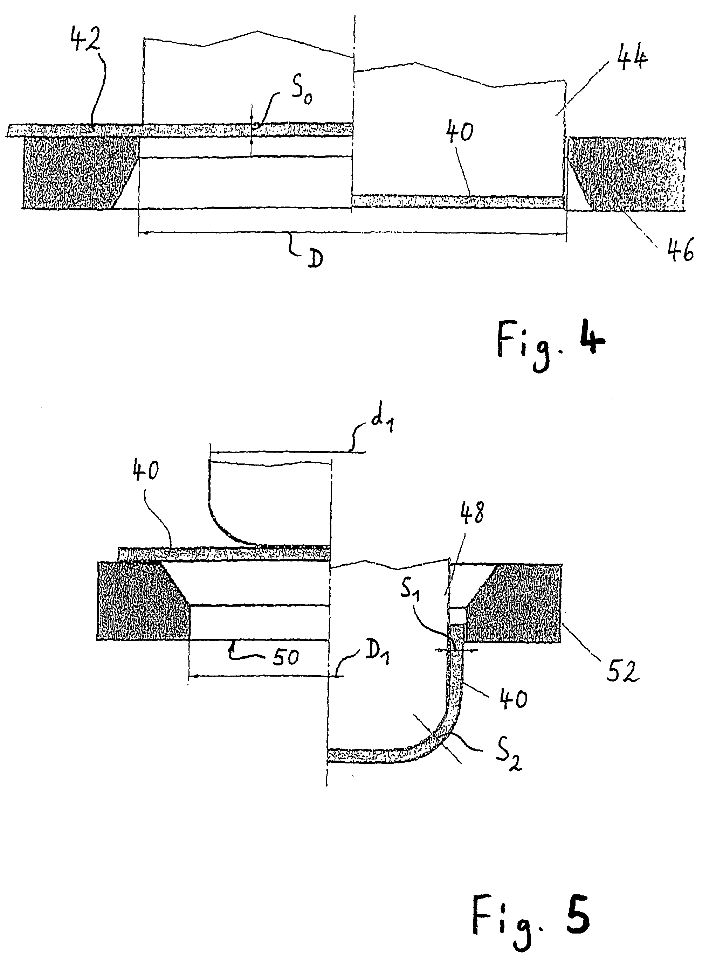

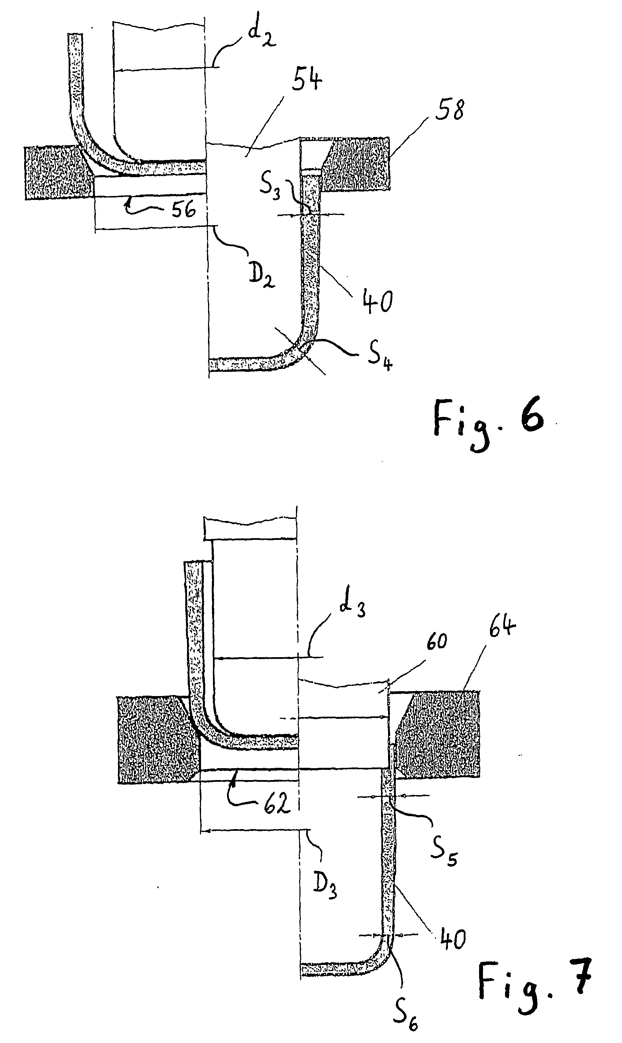

Fig. 1 zeigt ein erstes Ausführungsbeispiel eines Hydraulikkolbens 10 für eine hydraulische Kraftfahrzeugbremse im Längsschnitt. Der Kolben 10 ist hohl und hat ein offenes Ende 12. Er besteht aus einem Kolbenboden 14, der einstückig mit einer Seitenwand 16 verbunden ist.

Die Seitenwand 16 hat eine zylindrische Außenfläche 18, in die eine Ringnut 20 eingelassen ist, die sich in einem dem offenen Ende 12 benachbarten Endabschnitt der Seitenwand 16 befindet.

Die Seitenwand 16 hat ferner eine Innenfläche 22, die in einem an das offene Ende 12 angrenzenden und sich axial über die Ringnut 20 erstreckenden Bereich 24 zylindrisch ist. Vom Ende dieses Bereichs 24 bis zum Kolbenboden 14 verringert sich die Dicke der Seitenwand 16 unter Beibehaltung der zylindrischen Außenform kontinuierlich.

Die Abmessungen des Hydraulikkolbens 10 können entsprechend dem vorgesehenen Einsatzzweck gewählt werden. Der Kolben 10 kann beispielsweise 50,5 mm hoch sein und für einen Betriebsdruck von mindestens 160 bar ausgelegt sein. Die Wanddicken a, b und c sind dann so gewählt, dass der Kolben 10 insbesondere im Bereich der Ringnut 20 stabil gegenüber axialen Belastungen ist, ohne dass eine optimale Wanddicke c vergrößert wird, die einen Widerstand sowohl gegenüber axialen Druckkräften als auch gegenüber radialen Druckkompressionskräften sicherstellt. Für die genannte Kolbengröße kann das Maß a beispielsweise 1,9 mm, das Maß b 3,9 mm und das Maß c 3 mm betragen. Der zylindrische Bereich 24 der Innenfläche 22 erstreckt sich ausgehend vom offenen Ende 12 etwa 16 mm in axialer Richtung. Der Bereich der kontinuierlichen Wanddickenverminderung erstreckt sich dann über insgesamt 31 mm in Axialrichtung.

Fig. 2 illustriert einen Tiefziehschritt zur Herstellung des Kolbens 10. Vor diesem Tiefziehschritt wird ein scheibenförmiger, runder Rohling 26 aus Walzmetall herausgestanzt (nicht dargestellt). Dieser Rohling 26 wird mittels eines zylindrischen Stempels 28 durch eine Matrize 30 mit einer kreisrunden Matrizenöffnung 32 gepresst. Das Maß b wird durch den Spielraum zwischen dem Stempel 28 und der Matrize 30 definiert. In Fig. 2 ist in der linken Hälfte der Ausgangszustand und in der rechten Hälfte der Zustand nach Durchführen des Tiefziehschrittes dargestellt. Man erkennt, wie die Wanddicke der Seitenwand 16 vom offenen Ende 12 zum Kolbenboden 14 hin abnimmt. In diesem Zustand hat die Außenfläche 18 der Seitenwand 16 noch keine Zylinderform.

Der in Fig. 2 erläuterte Tiefziehschritt muss nicht auf einmal erfolgen, sondern kann auf mehrere Tiefziehschritte verteilt werden. In einem ersten Tiefziehschritt wird dann zunächst ein noch relativ flacher und breiter becherförmiger Rohling 26 erzeugt, der in nachfolgenden Tiefziehschritten zunehmend schmaler und höher wird, um sich der endgültig gewünschten Form immer weiter anzunähern.

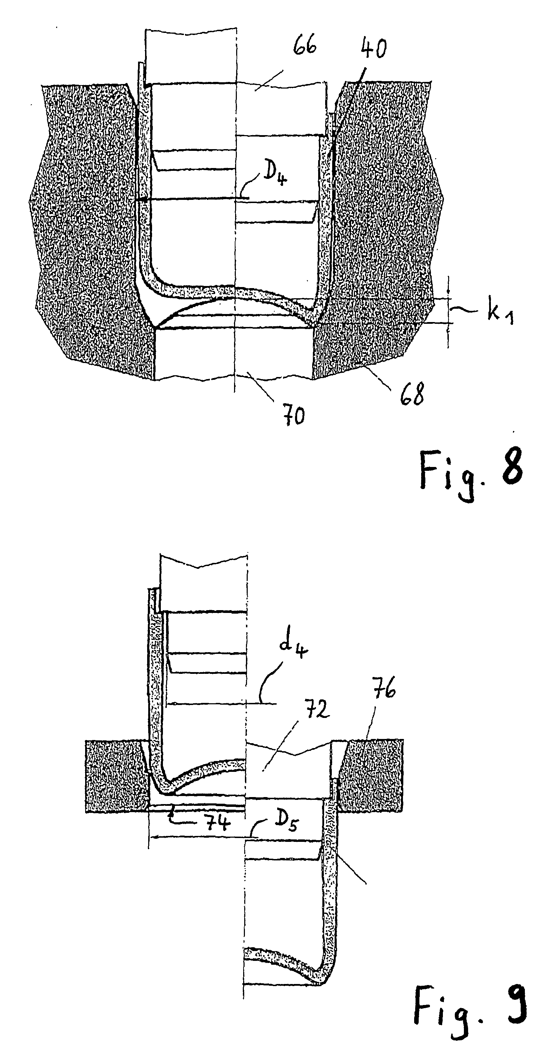

Fig. 3 zeigt einen nachfolgenden Formpressschritt, in dem der nun becherförmige Rohling 26 mittels eines weiteren Stempels 34 in eine weitere Matrize 36 gedrückt wird, um der Außenfläche 18 die Zylinderform und dem Kolbenboden 14 eine nach innen gewölbte Form zu geben. Um dies zu erreichen, hat der Stempel 34 eine konkave Stirnseite und die Matrize 36 einen konvexen Boden. Mit dem in Fig. 3 gezeigten Formpressschritt werden zugleich die Außenfläche 18 und der Kolbenboden 14 in die gewünschte Form gebracht.

Fig. 13 zeigt ein zweites Ausführungsbeispiel eines Hydraulikkolbens 10, das sich vom in Fig. 1 dargestellten Ausführungsbeispiel dadurch unterscheidet, dass der Kolbenboden 14 in seinem mittleren Bereich kugelkalottenförmig und in einem radial äußeren Bereich kegelstumpfförmig ausgebildet ist.

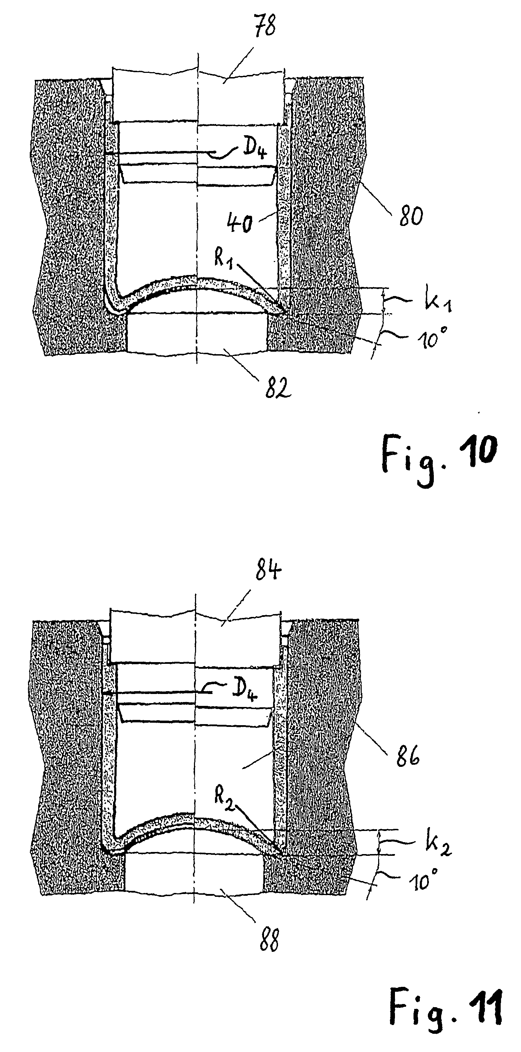

Die Fig. 4 bis 11 zeigen ein zur Herstellung des Kolbens aus Fig. 13 gut geeignetes Verfahren. In den Fig. 4 bis 11 ist links jeweils ein Ausgangszustand und rechts der Zustand widergegeben, der sich nach Durchführung des jeweiligen Bearbeitungsschritts ergibt.

In Fig. 4 ist zunächst ein Ausstanzschritt gezeigt, in dem ein scheibenförmiger, kreisrunder Rohling 40 aus einem Walzblech 42 der Qualität 08Yu einer Dicke S₀ von hier 3,6 mm und einem Durchmesser D von hier 124 mm mittels eines Stempels 44 und einer Matrize 46 herausgestanzt wird.

Fig. 5 zeigt einen ersten Tiefziehschritt, in dem der scheibenförmige Rohling 40 mittels eines ersten Stempels 48 durch eine erste kreisförmige Matrizenöffnung 50 einer Matrize 52 gepresst und dabei becherförmig verformt wird. Der erste Stempel 48 hat hier einen Durchmesser d₁ von 72 mm, während die erste Matrizenöffnung 50 einen Durchmesser D₁ von 80 mm aufweist. Der Außendurchmesser des nun becherförmigen Rohlings 40 an seinem offenen Ende beträgt daher 80 mm und die Wanddicke S₁ im Bereich seines offenen Endes 4 mm. Zum Boden hin verringert sich die Wanddicke aufgrund des Ziehvorganges kontinuierlich bis auf einen Wert S₂ von ungefähr 3,5 mm im Übergangsbereich zwischen der Seitenwand und dem Boden.

Fig. 6 zeigt einen zweiten Tiefziehschritt, in dem der Rohling 40 von einem Außendurchmesser von 80 mm auf einen Außendurchmesser von 65 mm gebracht wird, indem ein zweiter zylindrischer Stempel 54 den becherförmigen Rohling 40 durch eine zweite kreisförmige Matrizenöffnung 56 einer Matrize 58 drückt. Der Außendurchmesser d₂ des zweiten Stempels 54 beträgt 57 mm, während der Durchmesser D₂ der zweiten Matrizenöffnung 56 65 mm beträgt. Durch diesen Tiefziehschritt wird ein becherförmiger Rohling 40 mit einem Innendurchmesser von 57 mm und einem Außendurchmesser erhalten, der sich von 65 mm am offenen Ende zum Boden hin kontinuierlich verringert. Die Dicke der Seitenwand nimmt demnach von einem Wert S₃ von 4 mm auf einen Wert S₄ von 3,45 mm im Bereich des Übergangs zwischen der Seitenwand und dem Boden ab.

Fig. 7 zeigt einen dritten Tiefziehschritt, in dem der becherförmige Rohling 40 von einem Außendurchmesser von 65 mm auf einen Außendurchmesser von 56,5 mm gebracht wird, indem ein dritter zylindrischer Stempel 60 den Rohling 40 durch eine dritte kreisförmige Matrizenöffnung 62 einer Matrize 64 drückt. Der Außendurchmesser d₃ des dritten Stempels 58 beträgt 48,6 mm, während der Durchmesser D₃ der dritten Matrizenöffnung 62 56,5 mm beträgt. Wiederum nimmt durch den Ziehvorgang die Wanddicke der Seitenwand des Rohlings 40 zu seinem Boden hin ab, nahe dem offenen Ende des Rohlings 40 wird sie durch den Abstand zwischen der Seitenwand und der Matrize 64 bestimmt und hat einen Wert S₅ von 3,95 mm, während sie nahe dem Boden einen Wert S₆ von 3,4 mm hat. Wie aus Fig. 7 ersichtlich, umfasst der dritte Stempel 60 einen sein freies Ende bildenden ersten zylindrischen Abschnitt mit dem bereits genannten Außendurchmesser d₃ von 48,6 mm und einen sich daran anschließenden, zweiten zylindrischen Abschnitt mit einem Außendurchmesser von 53 mm. Dieser zweite, durchmessergrößere Abschnitt des dritten Stempels 60 formt am Ende des dritten Tiefziehschrittes in der Innenfläche der Seitenwand des Rohlings 40 eine Stufe 41 (siehe Fig. 12) durch Verminderung der Dicke der Seitenwand nahe dem offenen Ende. Die radiale Erstreckung der geformten Stufe beträgt 2,2 mm.

Fig. 8 zeigt einen ersten Formpressschritt, im Verlaufe dessen der Boden des Rohlings 40 nach innen gewölbt wird. Hierzu presst ein komplementär zur Innenfläche des Rohlings 40 ausgebildeter, stufenförmiger Stempel 66 den Rohling 40 in eine Formmatrize 68, indem der Stempel 66 mit der in der Seitenwand des Rohlings 40 ausgebildeten Stufe 41 in Eingriff tritt. Der Innendurchmesser D₄ der Formmatrizenöffnung beträgt 56,5 mm, so dass der Außendurchmesser des Rohlings 40 durch diese Öffnung nicht weiter verringert wird. Der Boden der Formmatrizenöffnung ist durch einen stempelförmigen Auswerfer 70 gebildet, dessen dem Rohling 40 zugewandte Fläche kugelkalottenförmig ist. Auf diese Weise wird der Boden des Rohlings 40 einwärts verformt bis zu einer Konkavität k₁ von 8 mm. Dabei wird der dem Boden benachbarte Teil der Seitenwand etwas radial nach innen gezogen.

Fig. 9 zeigt einen vierten Tiefziehschritt, in dem der Außendurchmesser des Rohlings 40 von 56,5 mm auf 54,3 mm gebracht wird, indem ein stufenförmiger Stempel 72, der mit der an der Innenfläche des Rohlings 40 ausgebildeten Stufe 41 in Eingriff tritt, den Rohling 40 durch eine vierte kreisförmige Matrizenöffnung 74 einer Matrize 76 presst. Ein das freie Ende des Stempels 72 bildender erster zylindrischer Abschnitt hat dabei einen Außendurchmesser d₄ von 46,4 mm, während die vierte Matrizenöffnung 74 einen Durchmesser D₅ von 54,3 mm aufweist. Durch diesen vierten Tiefziehschritt wird die Außenfläche der Seitenwand des Rohlings 40 zu einem Zylinder mit einem Durchmesser von 54,3 mm geformt. Aufgrund des das freie Ende des Stempels 72 bildenden zylindrischen Abschnitts mit dem Durchmesser d₄ bleibt auch die Innenfläche des Rohlings 40 in diesem Bereich zylindrisch. In dem sich daran anschließenden Bereich vergrößert sich der Innendurchmesser des Rohlings 40 bis zum Boden kontinuierlich, weil die Wanddicke der Seitenwand kontinuierlich abnimmt.

Fig. 10 zeigt einen zweiten Formpressschritt, in dem der Übergangsbereich zwischen der Seitenwand und dem Boden des Rohlings geformt wird. Hierzu drückt ein wiederum stufenförmiger Stempel 78 durch in Eingriff kommen mit der an der Innenfläche des Rohlings 40 vorhandenen Schulter 41 den Rohling 40 in die Öffnung einer Formmatrize 80, deren Boden durch einen stempelartigen Auswerfer 82 gebildet ist. Die dem Rohling 40 zugewandte Fläche des Auswerfers 82 ist im Zentrum kugelkalottenförmig und am Rand kegelstumpfförmig. Auf diese Weise legt sich der Übergangsbereich zwischen der Seitenwand und dem Boden des Rohlings 40 an die Formmatrizenöffnung an und bildet einen Übergangsradius R₁ von 2 mm aus. Die Konkavität k₁ von 8 mm bleibt erhalten. Der Innendurchmesser der Formmatrizenöffnung beträgt 54,3 mm, d.h. das Außenmaß des Rohlings 40 wird nicht geändert.

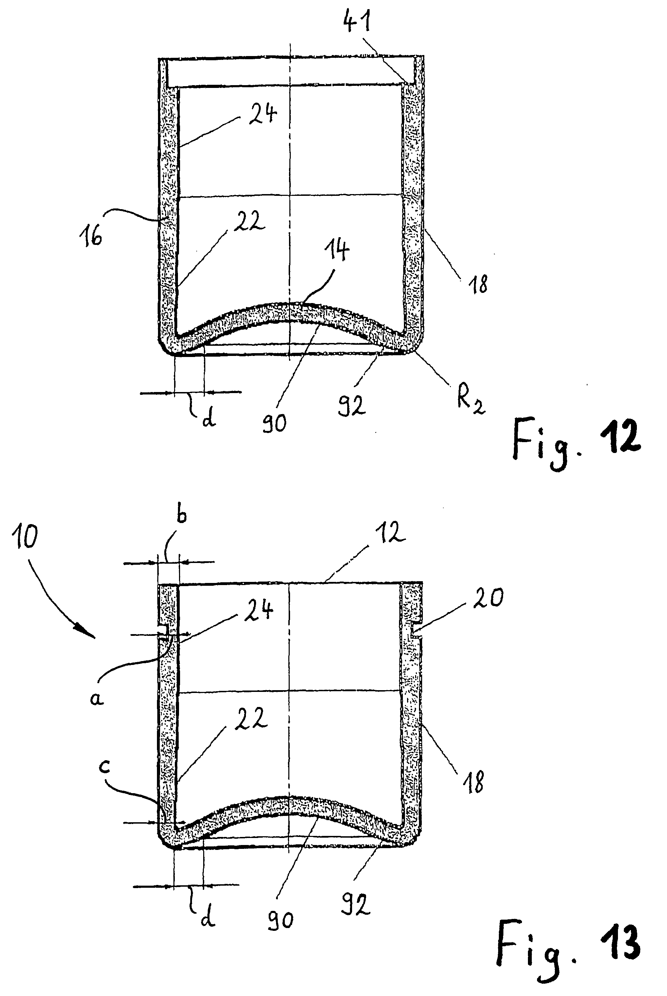

In Fig. 11 ist ein dritter Formpressschritt gezeigt, in dem der Boden des Rohlings 40 seine endgültige Form erhält. Hierzu drückt ein zum Eingriff mit der Schulter 41 im Rohling 40 ausgebildeter, stufenförmiger Stempel 84 den Rohling 40 in die Öffnung einer Formmatrize 86, deren Boden durch einen stempelförmigen Auswerfer 88 gebildet ist. Mittels des Auswerfers 88 wird die Konkavität auf einen Wert k₂ von 9 mm erhöht. Die kugelkalottenförmige Gestalt des Bodens des Rohlings in der Mitte und die kegelstumpfförmige Gestalt des Bodens am Rand wird dabei beibehalten. Der Übergangsradius zwischen der Seitenwand und dem Boden des Rohlings 40 vergrößert sich auf einen Wert R₂ von 3,4 mm.

Fig. 12 zeigt den fast fertigen Hydraulikkolben als Rohling im Längsschnitt. Man erkennt den zylindrischen Abschnitt 24 der Innenfläche 22, die sich von dem Abschnitt 24 zum Boden 14 kontinuierlich verringernde Seitenwanddicke, einen mittleren Bereich 90 des Bodens 14 mit kugelkalottenförmiger Gestalt und einen kegelstumpfförmigen Randbereich 92 des Bodens 14, der sich über eine Distanz d erstreckt, die nicht größer als der dreifache Wert der Wanddicke ist, den die Seitenwand 16 nahe dem Boden 14 hat. Weder die Innenfläche 22 noch die zylindrische Außenfläche 18 müssen weiter bearbeitet werden.

Zur Fertigstellung des Hydraulikkolbens 10 wird der die Stufe oder Schulter bildende Teil der Seitenwand 16 abgetragen (siehe Fig. 13) und die Ringnut 20 wird in die Außenfläche 18 gearbeitet, beispielsweise durch Ausstechen.

Üblicherweise wird zumindest die Außenfläche 18 des Hydraulikkolbens 10 nach Ausbilden der Ringnut 20 nachbearbeitet. Das Nachbearbeiten kann beispielsweise einen Schleifvorgang sowie ein sich daran anschließendes Beschichten mit einem korrosions- und abriebfesten Material umfassen. Die beschichtete Außenfläche 18 kann abschließend einem Poliervorgang unterzogen werden.

## Patentansprüche

1. Becherförmiger Hydraulikkolben (10) aus Walzblech, mit
- einem offenen Ende (12),
- einer Seitenwand (16) mit einer zylindrischen Außenfläche (18) und einer Innenfläche (22), wobei die Seitenwand (16) auf ihrer Außenfläche (18) in einem an das offene Ende (12) angrenzenden Abschnitt mit einer Ringnut (20) versehen ist, und
- einem Kolbenboden (14),
wobei ein Abschnitt (24) der Innenfläche (22) der Seitenwand (16), der an das offene Ende (12) angrenzt und sich in axialer Richtung über die Ringnut (20) erstreckt, eine zylindrische Form aufweist, **dadurch gekennzeichnet, dass** die Dicke der Seitenwand (16) sich von dem Abschnitt (24) der Innenfläche (22) bis zum Kolbenboden (14) monoton verringert.

2. Hydraulikkolben nach Anspruch 1,
**dadurch gekennzeichnet, dass** der Kolbenboden (14) nach innen gewölbt ist.

3. Hydraulikkolben nach Anspruch 2,
**dadurch gekennzeichnet, dass** der Kolbenboden (14) konkav gewölbt ist.

4. Hydraulikkolben nach Anspruch 2,
**dadurch gekennzeichnet, dass** der radial äußere Teil des Kolbenbodens (14) eine Kegelstumpfform und der mittlere Teil des Kolbenbodens (14) eine Kugelkalottenform aufweist.

5. Hydraulikkolben nach Anspruch 4,
**dadurch gekennzeichnet, dass** die Erstreckung des kegelstumpfförmigen Teils des Kolbenbodens (14) längs seines Profils nicht größer als das Dreifache der Wanddicke ist, die die Seitenwand (16) in ihrem an den Kolbenboden (14) angrenzenden Abschnitt aufweist.

6. Verfahren zur Herstellung eines Hydraulikkolbens nach einem der vorhergehenden Ansprüche, mit den Schritten:
- Ausstanzen eines scheibenförmigen runden Rohlings aus einem Stück Walzblech,
- Tiefziehen des scheibenförmigen runden Rohlings in eine Becherform mittels einer Matrize und eines Stempels,
- Formpressen des becherförmigen Rohlings zur Formung des Kolbenbodens und der zylindrischen Außenfläche des Hydraulikkolbens, und
- Einarbeiten einer Ringnut in die Außenfläche des Hydraulikkolbens.

7. Verfahren nach Anspruch 6,
**dadurch gekennzeichnet, dass** der scheibenförmige runde Rohling beim Tiefziehen in eine Becherform zunächst mittels eines ersten Stempels durch eine erste kreisförmige Matrizenöffnung und anschließend mittels eines zweiten Stempels durch eine zweite kreisförmige Matrizenöffnung gepresst wird, deren Durchmesser kleiner als der Durchmesser der ersten Matrizenöffnung ist.

8. Verfahren nach Anspruch 7,
**dadurch gekennzeichnet, dass** der erste Stempel und der zweite Stempel zylindrisch sind.

9. Verfahren nach Anspruch 7 oder 8,
**dadurch gekennzeichnet, dass** der becherförmige Rohling mittels eines dritten Stempels durch eine dritte kreisförmige Matrizenöffnung gepresst wird, deren Durchmesser kleiner als der Durchmesser der zweiten Matrizenöffnung ist, wobei der dritte Stempel einen von seinem freien Ende ausgehenden ersten zylindrischen Abschnitt und einen sich daran anschließenden zweiten zylindrischen Abschnitt aufweist, dessen Durchmesser größer als der Durchmesser des ersten zylindrischen Abschnitts und kleiner als der Durchmesser der dritten Matrizenöffnung ist, um am offenen Ende des Rohlings in der Seitenwand eine Stufe auszubilden.

10. Verfahren nach Anspruch 9,
**dadurch gekennzeichnet, dass** im Anschluss an das Tiefziehen in eine Becherform ein erstes Formpressen zum Ausbilden eines nach innen gewölbten Kolbenbodens stattfindet, indem ein stufenförmiger Stempel mit der Stufe in der Seitenwand des Rohlings in Eingriff kommt und den Rohling in eine Formmatrize drückt.

11. Verfahren nach Anspruch 10,
**dadurch gekennzeichnet, dass** im Anschluss an das erste Formpressen der becherförmige Rohling mittels eines stufenförmigen Stempels, der mit der Stufe in der Seitenwand des Rohlings in Eingriff tritt, durch eine vierte kreisförmige Matrizenöffnung gepresst wird, deren Durchmesser kleiner als der Durchmesser der dritten Matrizenöffnung ist, um die zylindrische Außenfläche der Seitenwand zu formen.

12. Verfahren nach Anspruch 11,
**dadurch gekennzeichnet, dass** im Anschluss an das Formen der zylindrischen Außenfläche der Seitenwand ein zweites Formpressen mittels einer Formmatrize und eines stufenförmigen, mit der Stufe in der Seitenwand des Rohlings in Eingriff tretenden Stempels stattfindet, um einen Übergangsbereich zwischen dem Kolbenboden und der Seitenwand zu formen.

13. Verfahren nach Anspruch 12,
**dadurch gekennzeichnet, dass** der den Kolbenboden berührende Bereich der Matrize im Zentrum kalottenförmig und am Rand kegelstumpfförmig ausgebildet ist.

14. Verfahren nach Anspruch 12 oder 13,
**dadurch gekennzeichnet, dass** im Anschluss an das Formen des Übergangsbereiches zwischen dem Kolbenboden und der Seitenwand ein drittes Formpressen mittels einer Formmatrize und eines stufenförmigen, mit der Stufe in der Seitenwand des Rohlings in Eingriff tretenden Stempels stattfindet, um die endgültige Gestalt des Kolbenbodens zu formen.

15. Verfahren nach einem der Ansprüche 6 bis 14,
**dadurch gekennzeichnet, dass** im Anschluss an das Ausbilden der Ringnut zumindest die Außenfläche nachbearbeitet wird, wobei das Nachbearbeiten wenigstens einen der folgenden Schritte umfasst:
- Schleifen;
- Beschichten; und
- Polieren.

## Claims

1. Cup-shaped hydraulic piston (10) made from rolled sheet metal, comprising
- an open end (12),
- a side wall (16) with a cylindrical outer surface (18) and an inner surface (22), wherein the side wall (16) at its outer surface (18) is provided with an annular groove (20) in a portion adjoining the open end (12), and
- a piston head (14),
wherein a portion (24) of the inner surface (22) of the side wall (16) adjoining the open end (12) and extending in axial direction over the annular groove (20) has a cylindrical shape, **characterized in that** the thickness of the side wall (16) decreases monotonically from the portion (24) of the inner surface (22) up the piston head (14).

2. Hydraulic piston according to claim 1,
**characterized in that** the piston head (14) is curved inwards.

3. Hydraulic piston according to claim 2,
**characterized in that** the piston head (14) is curved in a concave manner.

4. Hydraulic piston according to claim 2,
**characterized in that** the radially outer part of the piston head (14) has the shape of a truncated cone and the central part of the piston head (14) has the shape of a spherical cap.

5. Hydraulic piston according to claim 4,
**characterized in that** the extension of the truncated-cone-shaped part of the piston head (14) along its profile is not greater than three times the wall thickness of the side wall (16) in its portion adjoining the piston head (14).

6. Method of manufacturing a hydraulic piston according to one of the preceding claims, comprising the steps:
- punching a disk-shaped round blank out of a piece of rolled sheet metal,
- deep-drawing the disk-shaped round blank into a cup shape by means of a die and a punch,
- stamping the cup-shaped blank to form the piston head and the cylindrical outer surface of the hydraulic piston, and
- incorporating an annular groove into the outer surface of the hydraulic piston.

7. Method according to claim 6,
**characterized in that** the disk-shaped round blank during deep-drawing into a cup shape is pressed firstly by means of a first punch through a first circular die opening and then by means of a second punch through a second circular die opening, the diameter of which is smaller than the diameter of the first die opening.

8. Method according to claim 7,
**characterized in that** the first punch and the second punch are cylindrical.

9. Method according to claim 7 or 8,
**characterized in that** the cup-shaped blank is pressed by means of a third punch through a third circular die opening, the diameter of which is smaller than the diameter of the second die opening, wherein the third punch has a first cylindrical portion emanating from its free end and adjoined by a second cylindrical portion, the diameter of which is greater than the diameter of the first cylindrical portion and smaller than the diameter of the third die opening, in order to form a step in the side wall at the open end of the blank.

10. Method according to claim 9,
**characterized in that** subsequent to deep-drawing into a cup shape a first stamping operation is effected to form an inwardly curved piston head **in that** a step-shaped punch comes into engagement with the step in the side wall of the blank and presses the blank into a forming die.

11. Method according to claim 10,
**characterized in that** subsequent to the first stamping operation the cup-shaped blank is pressed by means of a step-shaped punch, which comes into engagement with the step in the side wall of the blank, through a fourth circular die opening, the diameter of which is smaller than the diameter of the third die opening, in order to form the cylindrical outer surface of the side wall.

12. Method according to claim 11,
**characterized in that** subsequent to forming of the cylindrical outer surface of the side wall a second stamping operation is effected by means of a forming die and a step-shaped punch, which comes into engagement with the step in the side wall of the blank, in order to form a transition region between the piston head and the side wall.

13. Method according to claim 12,
**characterized in that** the region of the bottom die touching the piston head is cap-shaped in the centre and truncated-cone-shaped at the edge.

14. Method according to claim 12 or 13,
**characterized in that** subsequent to forming of the transition region between the piston head and the side wall a third stamping operation is effected by means of a forming die and a step-shaped punch, which comes into engagement with the step in the side wall of the blank, in order to form the final configuration of the piston head.

15. Method according to one of claims 6 to 14,
**characterized in that** subsequent to forming of the annular groove at least the outer surface is subsequently machined, wherein the subsequent machining comprises at least one of the following steps:
- grinding;
- coating, and
- polishing.

## Revendications

1. Piston hydraulique (10) en tôle laminée sous forme de godet, comprenant:
- une extrémité ouverte (12),
- une paroi latérale (16) comprenant une face extérieure cylindrique (18) et une face intérieure (22), la surface extérieure (18) de la paroi latérale (16) étant pourvue d'une rainure annulaire (20) dans une partie adjacente à l'extrémité ouverte (12), et
- un fond de piston (14),
une partie (24) de la face intérieure (22) de la paroi latérale (16) limitrophe à l'extrémité ouverte (12) et qui s'étend en direction axiale au-dessus de la rainure annulaire (20) présentant une forme cylindrique,
**caractérisé en ce que** l'épaisseur de la paroi latérale (16) diminue de façon monotone à partir de ladite partie (24) de la face intérieure (22) jusqu'au fond de piston (14).

2. Piston hydraulique selon la revendication 1,
**caractérisé en ce que** le fond de piston (14) est bombé vers l'intérieur.

3. Piston hydraulique selon la revendication 2,
**caractérisé en ce que** le fond de piston (14) est bombé de façon concave.

4. Piston hydraulique selon la revendication 2,
**caractérisé en ce que** la partie radialement extérieure du fond de piston (14) présente une forme de cône tronqué et la partie centrale du fond de piston (14) une forme de calotte sphérique.

5. Piston hydraulique selon la revendication 4,
**caractérisé en ce que** l'extension de la partie en forme de cône tronqué du fond de piston (14) le long de son profil n'est pas plus grande que trois fois l'épaisseur de la paroi que présente la paroi latérale (16) à sa partie adjacente au fond de piston (14).

6. Procédé de fabrication d'un piston hydraulique selon l'une des revendications précédentes, comprenant les étapes suivantes:
- découpe à la matrice d'une ébauche circulaire en forme de disque à partir d'une tôle laminée,
- emboutissage profond au moyen d'une matrice et d'un poinçon de l'ébauche circulaire en forme de disque pour obtenir une forme de godet,
- formage de l'ébauche en forme de godet pour réaliser le fond de piston et la surface cylindrique du piston hydraulique, et
- réalisation d'une rainure circulaire dans la face extérieure du piston hydraulique.

7. Procédé selon la revendication 6,
**caractérisé en ce que** l'ébauche circulaire en forme de disque est pressée lors de l'emboutissage en une forme de godet à travers une première ouverture de matrice circulaire au moyen d'un premier poinçon puis à travers une deuxième ouverture de matrice circulaire au moyen d'un deuxième poinçon, ouverture dont le diamètre est plus petit que le diamètre de la première ouverture de matrice.

8. Procédé selon la revendication 7,
**caractérisé en ce que** le premier poinçon et le deuxième poinçon sont cylindriques.

9. Procédé selon la revendication 7 ou 8,
**caractérisé en ce que** l'ébauche en forme de godet est pressée à travers une troisième ouverture de matrice circulaire au moyen d'un troisième poinçon, le diamètre de cette ouverture étant plus petit que le diamètre de la deuxième ouverture de matrice, le troisième poinçon présentant une partie cylindrique à partir de son extrémité libre suivie d'une deuxième partie cylindrique dont le diamètre est plus grand que le diamètre de la première partie cylindrique et plus petit que le diamètre de la troisième ouverture de matrice afin de former un étage dans la paroi latérale à l'extrémité ouverte de l'ébauche.

10. Procédé selon la revendication 9,
**caractérisé en ce qu'**on procède, après l'emboutissage en une forme de godet, à un premier formage sous pression pour former un fond de piston bombé vers l'intérieur en mettant en prise l'étage dans la paroi latérale de l'ébauche avec un poinçon étagé et en pressant l'ébauche dans une matrice de formage.

11. Procédé selon la revendication 10,
**caractérisé en ce que** l'ébauche en forme de godet est pressée, après le premier formage sous pression, à travers une quatrième ouverture de matrice circulaire à l'aide d'un poinçon étagé qui entre en prise avec l'étage dans la paroi latérale de l'ébauche, le diamètre de la quatrième ouverture de matrice étant plus petit que le diamètre de la troisième ouverture de matrice, afin de former la surface extérieure cylindrique de la paroi latérale.

12. Procédé selon la revendication 11,
**caractérisé en ce qu'**un deuxième formage est effectué après le formage de la surface extérieure cylindrique de la paroi latérale, au moyen d'une matrice de formage et d'un poinçon étagé entrant en prise avec l'étage dans la paroi latérale de l'ébauche afin de former une partie de transition entre le fond de piston et la paroi latérale.

13. Procédé selon la revendication 12,
**caractérisé en ce que** la partie de la matrice touchant le fond de piston présente une forme de calotte au centre et une forme tronconique au bord.

14. Procédé selon la revendication 12 ou 13,
**caractérisé en ce qu'**un troisième formage par pression est effectué, après le formage de la partie de transition entre le fond de piston et la paroi latérale, au moyen d'une matrice de formage et d'un poinçon étagé entrant en prise avec l'étage dans la paroi latérale de l'ébauche afin de former la configuration définitive du fond de piston.

15. Procédé selon l'une des revendications 6 à 14,
**caractérisé en ce qu'**au moins la surface extérieure est réusinée après la formation de la rainure annulaire, ce réusinage comprenant au moins une des étapes suivantes:
- rectification;
- revêtement; et
- polissage.
